# EUROPEAN PATENT SPECIFICATION

(11) **EP 3 540 845 B1**
(45) Date of publication and mention of the grant of the patent: **20.08.2025**
(21) Application number: 18162223.4
(22) Date of filing: 16.03.2018
(51) Int. Cl.: H01M 10/647, H01M 10/6557, H01M 10/658

(54) **BATTERY CELL ARRANGEMENT**
BATTERIEZELLENANORDNUNG
ARRANGEMENT DE CELLULE DE BATTERIE

(43) Date of publication of application: 18.09.2019
(73) Proprietor: ABB Schweiz AG, 5400 Baden (CH)
(72) Inventor: Schuler, Gabriel, 6415 Arth (CH); Flueckiger, Reto, 8055 Zürich (CH); Sologubenko, Oleksandr, 8906 Bonstetten (CH); Wicki, Stefan, 5702 Niederlenz (CH); Kaufmann, Herbert, 5200 Brugg (CH); Guggisberg, Beat, 5417 Untersiggenthal (CH)
(74) Representative: Sykora & König Patentanwälte PartG mbB

(56) References cited:
- EP-A1- 2 608 309
- WO-A1-2013/037742
- US-A1- 2013 171 493
- US-A1- 2014 162 107

## Description

### FIELD OF THE INVENTION

The invention relates to the field of cooling of battery cells. In particular, the invention relates to a battery cell arrangement.

### BACKGROUND OF THE INVENTION

When battery cells are charged and discharged heat is generated, which may have to be removed. For example, this is the case for battery cells in electric vehicles, where the charging and discharging may take place rather fast. To extend the lifetime and to improve the performance of battery cells, it may be beneficial to provide cooling means that go beyond a pure air cooling of an outside of the battery cells.

US 2009 258 289 A1 shows a cooling plate for batteries, in which channels are formed between two substrates.

US2012237805A1 shows a battery cell cooler that is formed of complementary plates, between which cooling channels are formed.

US 6 512 347 B1 shows a battery cell arrangement with cooling plates between adjacent battery cells that are liquid cooled on a top edge.

WO2013/037 742 A1 shows a battery module with several battery cells, between which a cooling element is arranged. The cooling element has a channel, which is covered by a foil.

US 2014/162 107 A1 describes a heat-exchanging pouch, which is arranged between battery cells. The pouch is made of two foils and webs between the foils.

US 2013/171 493 A1 shows a heat exchanger for a battery, which has a fluid transfer layer 12, which is covered by two graphite foils 14.

EP 2 608 309 A1 shows in a cooling structure to be inserted between two prismatic batteries with a cooling channel that is covered by a foil.

### DESCRIPTION OF THE INVENTION

It is an objective of the invention to improve the cooling of battery cells.

This objective is achieved by the subject-matter of the independent claims. Further exemplary embodiments are evident from the dependent claims and the following description.

The invention relates to a battery cell arrangement. A battery cell arrangement may comprise a plurality of battery cells, in particular pouch cells, which may be connected in series and/or in parallel. The battery cell arrangement may furthermore comprise a housing and/or support member, which mechanically interconnects the pouch cells, which, for example, may be arranged one after the other in a stack.

The battery cell arrangement may be used as electrical energy storage of any mobile device e.g. an electric vehicle or any stationary application. However, it is also possible that the battery cell arrangement is used in other applications.

According to an embodiment of the invention, the battery cell arrangement comprises at least two pouch cells and a support frame arranged between the two pouch cells, wherein the support frame has a cooling frame sandwiched between the pouch cells.

A pouch cell may be an electrochemical cell with two electrodes and an electrolyte inside a pouch, which may be seen as a flexible bag. The electrodes may be foil based. Also the terminals of the pouch cell, which may protrude from a side of the pouch cell, may be made of foil and/or may be flexible.

It may be that the battery cell arrangement comprises a plurality of pouch cells, which are stacked in a stacking direction. Between two adjacent pouch cells, a support frame may be arranged, i.e. the pouch cells and the support frames may be arranged alternating one after the other in the stacking direction. The pouch cells may be arranged in such a way that their terminals all protrude from one side of the battery cell arrangement.

It has to be noted that an extension of the pouch cells and the support frame in between them in directions orthogonal to the stacking direction may be much larger (such as 10 times larger) as in the stacking direction.

The support frame, which may be made of plastics, such as a polymer, may have an inner part, i.e. the cooling frame or cooling plate or cooling fluid circulating channel, which may be in direct thermal contact with the pouches of the pouch cells. Direct thermal contact may mean that the cooling frame and the pouch are in mechanical contact, such that heat from the one component may flow to the other one via a contact area. The cooling frame may be a substantially flat and/or plate like part of the support frame, which may have two flat faces facing the pouches of the adjacent pouch cells. The cooling frame may be in two-dimensional contact with the facing sides of the adjacent pouch cells.

According to an embodiment of the invention, the cooling frame has a cooling channel running through the cooling frame between an outlet and an inlet, wherein the cooling channel is covered by a foil attached to the cooling frame for forming a tubular, for example meandering, passage through the cooling frame. The foil, which may be seen as a membrane, may seal a cooling fluid volume inside the cooling frame from the pouch cells. In such a way, the adjacent pouch cells may be directly liquid cooled with a cooling fluid running through the cooling channel.

In general, a foil may be a sheet and/or plate of plastics and/or metal, which is thin and flexible. For example, thinner than 0.8 mm. The foil may be made of a different material as the support frame and/or the cooling frame. The foil may be made of a multilayer structure consisting multiple single layers of different materials.

A tubular passage may be a cavity, which is formed as a pipe or tube and/or which allows a fluid flow through it from one end to the other without a loss of fluid between the ends to an outside.

The foil may be welded to the cooling frame. For example, a polymeric welding process may be used to realize a sealing between the cooling frame and the foil. Alternatively or additionally, it may be clamped and/or sealed by flat or conventional sealing rings. The foil may be made of an electrical isolating material, such as a polyimide and/or Kapton ^{©}. In such a way, a discharge of the battery cells into the cooling fluid may be avoided.

The cooling channel may be a longitudinal groove and/or opening in the cooling frame, which is covered by the foil. In such a way, a tubular passage may be formed, which runs through the cooling frame in a direction substantially orthogonal to the stacking direction of the pouch cells.

It may be that the cooling channel meanders through the cooling frame. The term "meandering" may mean that the cooling channel and/or the tubular passage may change its direction in the cooling frame several times. For example, the cooling channel and/or the tubular passage may have at least three substantially parallel sections, which may be interconnected with curved sections. These sections may be separated from one another by a weld of the foil to the cooling frame.

Within the meandering section, the foil may be welded to the cooling frame. The foil may only be edge welded to the cooling frame and the meandering structure may be only provided by a compressible member between the foil and the cooling frame. Multiple edge sealings may avoid leakage of cooling fluid. To increase safety, the intermediate section between two sealings may be equipped with electrical contacts, which may trigger an alarm in case of leakage of the inner sealing.

The foil may be flexible, i.e. may be as thin that it may be deformed under different pressure applied by the cooling fluid and/or the pouch of the pouch cell. For example, the foil may be thinner as 0.8 mm. With a foil on the cooling channel, a pouch cell compression may be adjusted by adjusting a cooling fluid pressure. The cooling system providing the cooling fluid may have a pressure compensation function, which may rise the pressure of the cooling fluid, when the pressure inside the pouch cells rises, which may be the case, when the pouch cells are charged or discharged. This may allow for a uniform side pressure to the one or more pouches in contact with the cooling frame. Furthermore, pouch cell thickness manufacturing tolerances may be compensated.

In general, by compensating pressure differences between the pouch and the cooling frame, a thermally optimized contact for the pouch cells may be provided, which may improve the cooling abilities of the battery cell arrangement.

According to an embodiment of the invention, a pouch of one of the pouch cells lies on the foil. The pouch also may be made of a foil. This foil and the foil on the cooling frame may be in direct contact. In such a way, pressure changes in the pouch cells may be directly applied to the foil on the cooling channel and vice versa.

According to an embodiment of the invention, a compressible member is attached to the cooling frame besides the cooling channel. The compressible member may be made of rubber. For example, such a compressible member may be provided between sections of the cooling channel. The compressible member also may be used for compensating pressure changes in the pouch cell and/or for compensating pouch cell manufacturing tolerances.

According to an embodiment of the invention, the foil is attached to the compressible member. For example, the compressible member and the foil may be welded to the cooling frame or just positioned onto the cooling frame without welding.

According to an embodiment of the invention, the compressible member covers the cooling frame completely between sections of the cooling channel. The area of the cooling frame between sections of the cooling channel and/or adjacent to the cooling channel may be covered with the compressible member. The compressible member may be made of a sheet from which the shape of the cooling channels has been removed and/or cut out. In such a way, a comparable large area of the pouch may lie on the compressible member.

According to an embodiment of the invention, at least a section of the cooling channel extend completely through the cooling frame in a stacking direction of the pouch cells. In this case, the cooling channel may be covered on both sides of the cooling frame by a foil. It may be that one single cooling channel is provided between two adjacent cells. The cooling channel may be a through hole in the cooling frame, which is covered on both sides of the cooling frame with a foil.

According to an embodiment of the invention, at least a section of the cooling channel extends only partially through the cooling frame in a stacking direction of the pouch cells. It may be that the cooling channel is a groove in the cooling frame, which groove is covered by the foil. For example, only one pouch cell of the two pouch cells sandwiching the support frame may be cooled by the cooling channel. The other pouch cell may be cooled by the next support frame. In this way, pouch cells may be thermally decoupled.

According to an embodiment of the invention, the cooling frame comprises two cooling channels, each cooling channel provided on one side of the cooling frame and each cooling channel extending only partially through the cooling frame. It may be that every pouch cell on each side of the cooling frame has a cooling channel of its own. This may be realized by cooling channels, which are provided as grooves on different sides of the cooling frame. It may be that the cooling channels are aligned mirror symmetric with respect to a middle plane of the cooling frame.

According to an embodiment of the invention, the two cooling channels are separated by a thermally isolating material provided in the support frame. This is a further possibility of thermally decoupling the pouch cells adjacent to the cooling frame. This may provide a thermal runaway protection by the thermally insulating material. The thermally insulating material may be provided between the cooling channels, which may separate different flow fields of cooling fluid of adjacent pouch cells. The thermally insulating material may be or may comprise a glass fiber mat or equally thermal insulating material or a combination of multiple thermal insulating layers.

According to an embodiment of the invention, a pouch cell is mechanically supported by two adjacent support frames, which clamp a border of the pouch cell between them. The support frame between two pouch cells may have a border, which is thicker than the cooling frame in the stacking direction. The support frame may mechanically support the pouch cell at a circumferential border. The pouch of the pouch cell may be made of two foils, which are welded together at their border. This border may be clamped by the support frames. For example, the support frame may have a rectangular shape. Each of the support frames may have a cooling channel as described in the above and in the following.

According to an embodiment of the invention, the support frame has a border that is thicker than the cooling frame. In such a way, a volume is provided between adjacent support frames, which is adapted for accommodating a pouch of a pouch cell.

According to an embodiment of the invention, the outlet and the inlet are provided in a border of the support frame, such that outlets and inlets of adjacent support frames are overlapping each other. Each of the inlet and/or the outlet of the cooling channel may be provided by a through hole in a border of the support frame. This through hole may extend in the stacking direction through the border. When the inlets (and/or outlets) of adjacent support frames are aligned with each other, an inlet (and/or outlet) of the battery cell arrangement is provided, to which the cooling channels are all connected in parallel. This distribution piping may be included in the support frame and/or may be attached to the support frame by a separate pipe or piping system.

According to an embodiment of the invention, electrical contacts for detecting a leak are provided in a sealing area surrounding the inlet and/or the outlet. This sealing are may be provided as two redundant sealings, for example in the form of two rings. The electrical contacts for leakage detection may be provided between the redundant sealings.

According to an embodiment of the invention, the support frame has a terminal cooling channel in a border below an electrical terminal interconnection, which is interconnecting two terminals of adjacent pouch cells. The pouch cooling channel in the cooling frame may be connected to a terminal cooling channel in the border of the support frame, for example in series or in parallel. The terminal cooling channel may be used for cooling terminals of adjacent pouch cells, which are connected with each other, for example for connecting the pouch cells electrically in series and/or in parallel.

In general, the terminal cooling channel may be hydraulically connected in series or in parallel or may be hydraulically fully independent to the pouch cooling channel.

The terminals or tabs of the pouch cells may have a good thermal conductivity to the inside of the battery cell. This thermal conductivity may be better than a thermal resistance from the center of the pouch cell to the cooling channel in the cooling frame. With the terminal cooling channel, the pouch cell additionally may be cooled via its terminals.

For example, a terminal of a pouch cell and a terminal of an adjacent pouch cell may be bent towards each other over the border of the support frame and/or may be interconnected there with each other, for example by welding. The terminal interconnection formed by the two bent terminals may lie on the border of the support frame on the terminal cooling channel.

According to an embodiment of the invention, a thermally conducting insert may be provided in the border between the terminal cooling channel and the terminal interconnection. The insert may be a metal plate that is inserted into the border of the support frame, which may be made of plastics material. The thermally conducting insert may improve the heat transfer between the terminal interconnection and the terminal cooling channel.

According to an embodiment of the invention, the terminal cooling channel is formed as tubular passage within the border of the support frame. In other words, the terminal cooling channel need not be formed by a groove covered by foil. It may be that the terminal cooling channel is wider in a stacking direction of the pouch cells than the cooling channel in the cooling frame. This may increase the effective area for heat transfer between the terminal interconnection and the terminal cooling channel. Since the border of the support frame may be wider than the cooling frame in stacking direction, there also may be space for a wider terminal cooling channel.

According to an embodiment of the invention, the foil is sealed to the cooling frame with two separate sealings. These sealings may be two welds and/or may surround the cooling channel. The sealings may be provided as inner sealing and outer sealing. Electrical contacts for detecting a leak may be provided between the sealings. A void may be present between the sealings and non-contacting electrical contacts may be positioned in the void. This may allow detect leaking cooling fluid before it leaks the outer redundant sealing.

According to an embodiment of the invention, the battery cell arrangement further comprises at least three pouch cells stacked along a stacking direction, wherein between two adjacent pouch cells, a support frame with a cooling channel covered by a foil is arranged. The battery cell arrangement may be composed of a stack of pouch cells, which are arranged alternating with support frames as described in the above and in the following. It has to be noted that the stack of pouch cells may be clamped between two termination members, such that the pouch cells and support frames are pressed against each other.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a front view of a pouch cell for a battery cell arrangement according to an embodiment of the invention.
Fig. 2 schematically shows a side view of the pouch cell of Fig. 1.
Fig. 3 schematically shows a side view of a battery cell arrangement according to an embodiment of the invention.
Fig. 4 schematically shows a top view of the part of the battery cell arrangement of Fig. 3.
Fig. 5 shows a sectional view of a battery cell arrangement according to an embodiment of the invention.
Fig. 6 shows a detail of Fig. 5.
Fig. 7 shows a sectional view through a support frame for a battery cell arrangement according to an embodiment of the invention.
Fig. 8 shows a sectional view of a battery cell arrangement according to an embodiment of the invention.
Fig. 9 shows a detail of Fig. 8.
Fig. 10 shows a sectional view through a support frame for a battery cell arrangement according to an embodiment of the invention.
Fig. 11 shows a sectional view of a battery cell arrangement according to an embodiment of the invention.
Fig. 12 shows a detail of Fig. 11.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

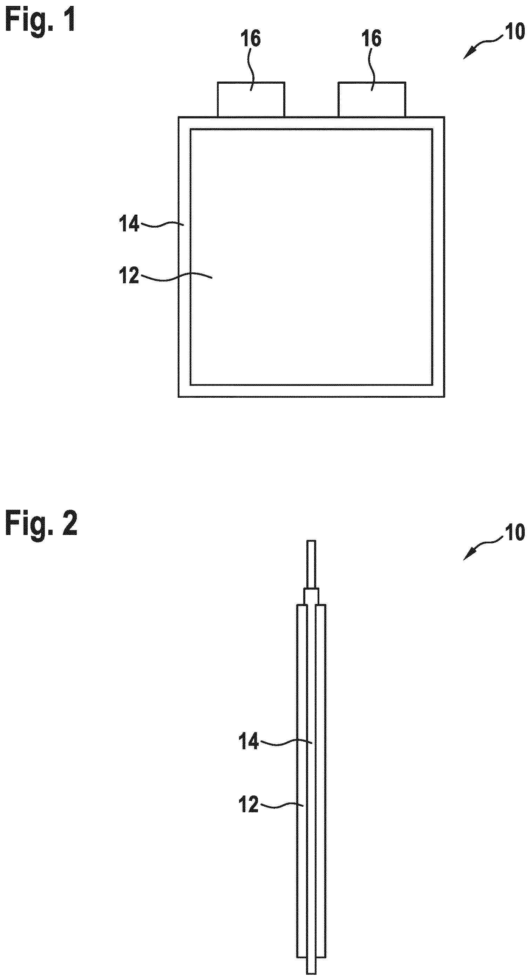

Fig. 1 and 2 schematically show a pouch cell 10 from the front and from the side. The pouch cell 10 has a substantially rectangular pouch 12, which may be made of two foils, which are attached together at a border 14 of the pouch cell 10, for example by welding. The pouch cell 10 has two terminals or taps 16, which protrude from a top side of the pouch cell 10. Each terminal 16, which may be made of an electrically conducting foil or a thin metal strip, is electrically connected to an electrode inside the pouch 12, which also accommodates an electrolyte.

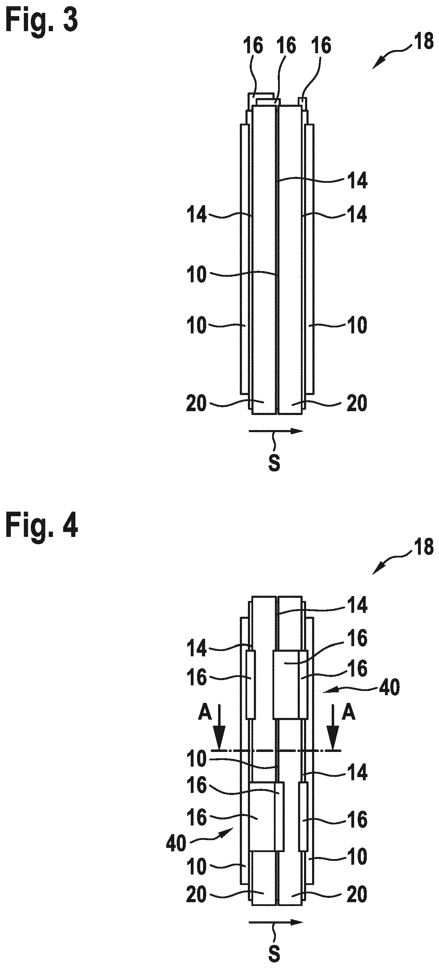

Fig. 3 and 4 show a battery cell arrangement 18 comprising three pouch cells 10 and two support frames 20 sandwiched between them. It can be seen that the border 14 of each pouch cell is clamped between two adjacent support frames 20. The pouch cells 10 and support frames 20 are stacked in a stacking direction S. It has to be understood that a battery cell arrangement 18 may comprise a plurality of such pouch cells 10 and support frames 20 that may be stacked alternating with respect to each other.

For electrically connecting adjacent pouch cells 10, terminals 16 of these pouch cells are bent towards each other and interconnected with each other, for example by welding.

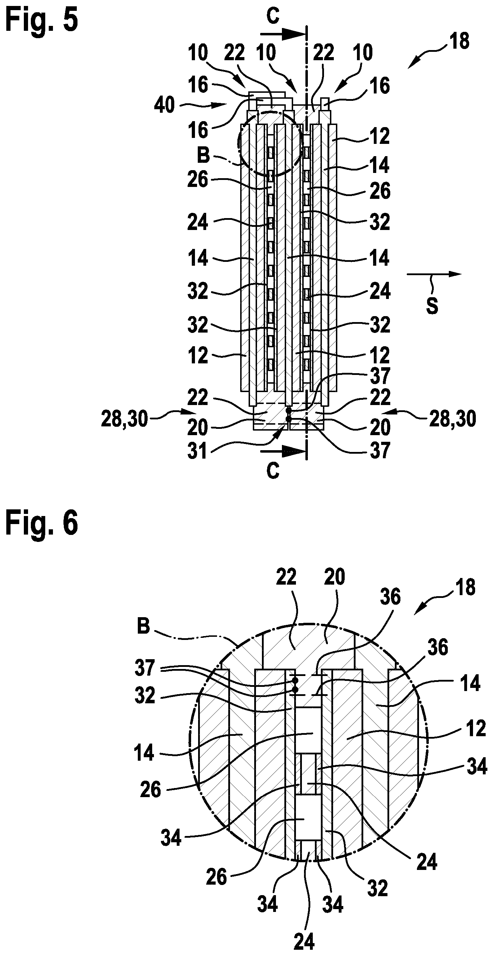

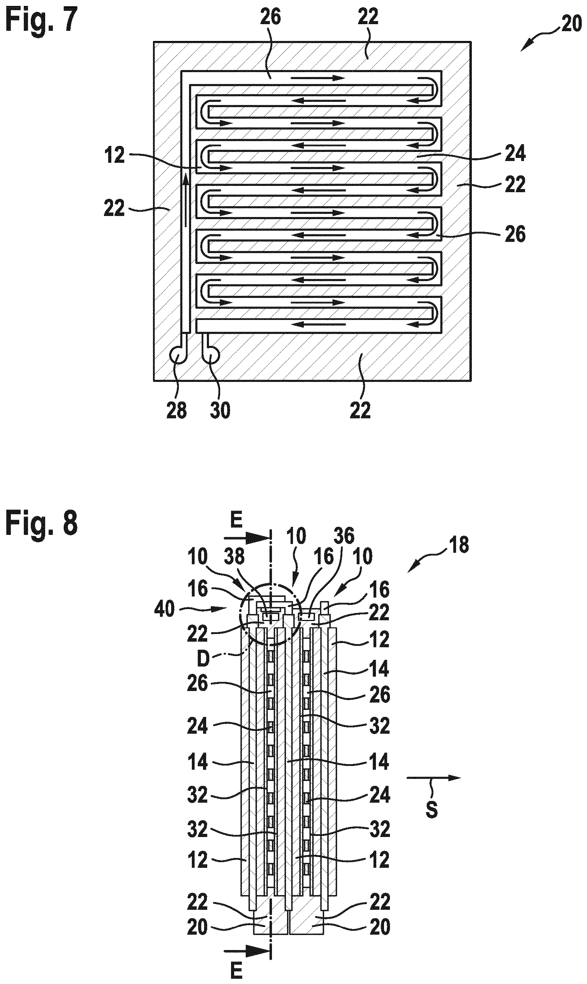

Fig. 5 shows a cross-sectional view of an embodiment of a battery cell arrangement 18 along the plane A-A in Fig. 4. Fig. 6 shows the detail B of Fig. 6. Fig. 7 shows a cross-sectional view along the plane C-C in Fig. 5.

The two support frames 20 have a border 22, which may have substantially the same shape as the border 14 of the pouch cell 10. Here, the borders 14, 22 are rectangular, but other shapes also may be possible. Within the border 22, each support frame 20 has a cooling frame 24. In the stacking direction S, the border 22 may be thicker as the cooling frame 24. In such a way, a cavity is formed between two adjacent support frames 20, which accommodate the pouch 14 of the pouch cell 10 clamped between them.

As better seen in Fig. 7, the cooling frame 24 comprises a cooling channel 26, which runs through the cooling frame 24 from an inlet 28 to an outlet 30. The cooling channel 26 may be aligned in a plane substantially orthogonal to the stacking direction S. The cooling channel 26 meanders through the cooling frame 24. It has several straight sections running in different directions, which are interconnected by curved sections.

The cooling channel 26 in Fig. 5 to 7 is provided as a through-hole, i.e. it extends completely through the cooling frame 24 in the stacking direction S. In such a way, both sides of the cooling frame 24 may be cooled by one cooling channel 26.

On each side of the cooling frame 24, a foil 32 is attached, which covers the cooling channel 26. In such a way, a tubular passage is formed through the cooling frame 24. The foil 32 prevents a flow of cooling fluid outside of the cooling channel 26. Furthermore, since the foil 32 is flexible, it allows a pressure equalization between the cooling channel 26 and the respective pouch 12. The foil 32 may cover the complete area of the cooling frame 24, which comes into contact with the cooling frame 24.

It is possible that a compressible member 34 is provided between at least parts of the surface of the cooling frame 24 and the foil 32. The compressible member 34, which may be made of rubber, may be used for adjusting tolerances of the cooling frame 24 and/or the pouch cell 10.

As indicated in Fig. 6, the foil 32 may be sealed to the cooling frame 24 at least at the border of the cooling frame 24 with one or more sealings 36, which may be weld lines and/or gluing lines. The sealings 36 between the foil 32 and the cooling frame 24 may be redundant. For example, there may be more than one sealing 36.

Electrical contacts 37 for detecting a leak are provided between the sealings 36. Equipping the area between the two redundant sealings 36 with electrical contacts 37 placed at a certain distance from each other may allow to detect leaking cooling fluid in the void between the redundant seals 36. The electrical contacts 37 may be included in the cooling frame 24 and/or in the foil 32.

The foil 32 also may be welded onto the compressible member 34, which may be welded onto the cooling frame 24. However, it is also possible that the compressible member 34 is glued onto the cooling frame 24 and/or that the foil 32 is glued or positioned onto the compressible member 34.

Fig. 7 shows that the inlet 28 and the outlet 30 may be provided in the border 22 of the support frame 20 as through holes. The inlets 28 and the outlets 30 of adjacent support frames 20 may cover each other to form an inlet channel and outlet channel of the battery cell arrangement 18.

As shown in Fig. 5, a sealing area 31 may be provided between adjacent inlets 28 and/or outlets 30, which surrounds the adjacent inlets 28 and/or outlets 30. Electrical contacts 37 for detecting a leak may be provided in the sealing area 31.

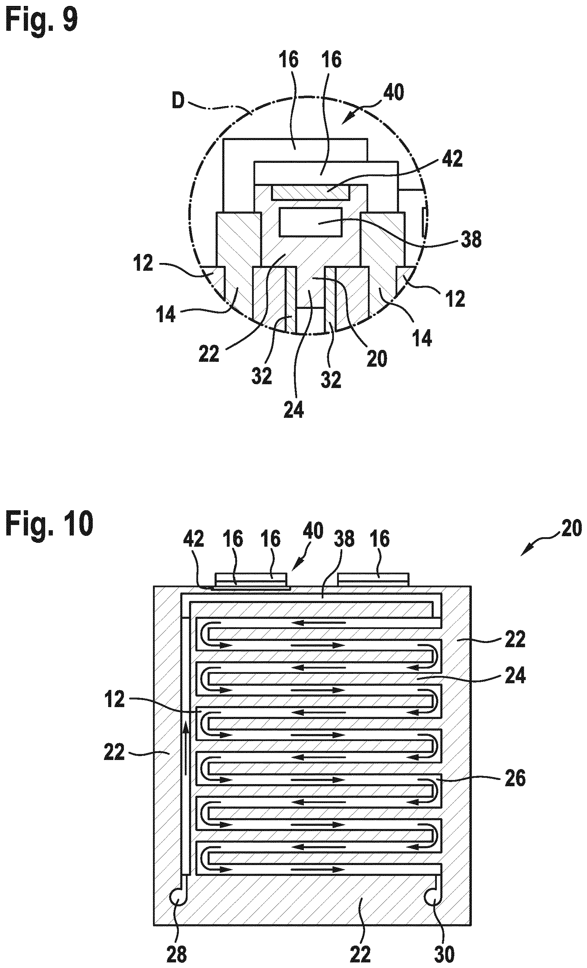

Fig. 8 shows a cross-sectional view of an embodiment of a battery cell arrangement 18 along the plane A-A in Fig. 4. Fig. 9 shows the detail D of Fig. 8. Fig. 10 shows a cross-sectional view along the plane E-E in Fig. 8.

Fig. 8 shows that a terminal cooling channel 38 may be provided in the border 22 of the support frame 20. The terminal cooling channel 38 may be formed as a tubular passage with the material of the border 22 of the support frame 22. Furthermore, the terminal cooling channel 38 may be wider as the cooling channel 26 in the cooling frame 24 in stacking direction S.

The terminal cooling channel 38 is provided below an electrical terminal interconnection 40, which is interconnecting the two terminals 16 of the adjacent pouch cells 10. The terminal interconnection is formed of the two terminals 16, which are bent towards each other onto the border 22.

The terminal interconnection 40 and/or the terminals 16 may be attached to an insert 42 provided in the border 22. For example, the terminals 16 may be welded together and to the insert 42. The insert 42, which is provided between the terminal cooling channel 40 and the terminal interconnection 40 may be made of metal and/or may be embedded into the border 22. The insert 42 may improve conditions under welding and/or may spread the heat to the support frame 20. Alternatively, the insert 42 may be omitted and the terminals 16 may be pressed to the support frame 20.

Fig. 10 shows that the terminal cooling channel 38 may be series-connected with the pouch cooling channel 26 between the inlet 28 and the outlet 30. Furthermore, Fig. 10 shows that the inlet 28 and the outlet 30 may be provided at different sides of the support frame 20.

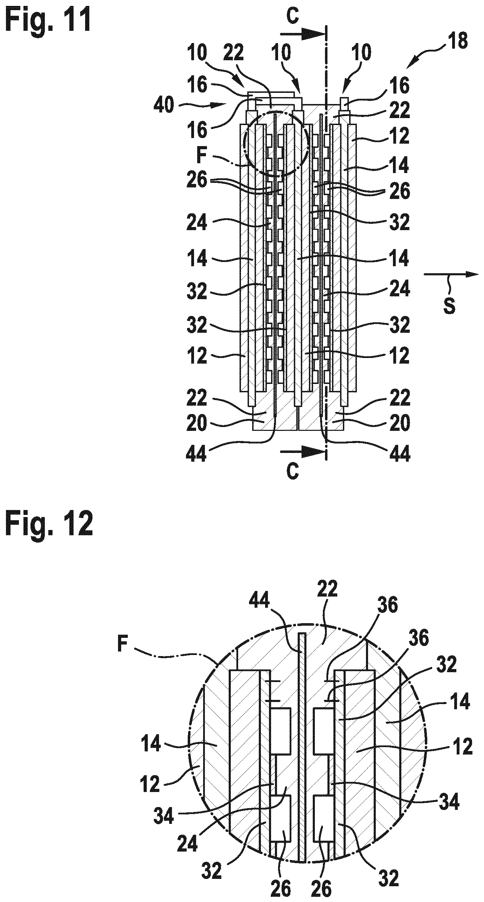

Fig. 11 shows a cross-sectional view of an embodiment of a battery cell arrangement 18 along the plane A-A in Fig. 4. Fig. 12 shows the detail F of Fig. 11. The cross-sectional view along the plane C-C in Fig. 11 may be as shown in Fig. 7.

Fig. 11 and 12 shows a support frame 20 with two cooling channels 26 on each side with respect to the stacking direction S. Both cooling channels 26 may be connected in parallel via the inlet 28 and the outlet 30, however, may not be interconnected within the cooling frame 24.

The cooling channels 26 are formed as grooves and do not protrude through the cooling frame 24. Both cooling channels 26 are covered by a foil 32 as described with respect to the previous figures. A thermally isolating material 44, such as a glass fibre mat, is arranged between the cooling channels 26. The thermally isolating material 44 may be provided through the cooling frame 24 and optionally may extend in the border 22 of the support frame 20.

It has to be noted that the terminal cooling channel 38 as described with respect to Fig. 8 to 10 may be combined with the support frame 20 of Fig. 11 and 12 having a double cooling channel 26.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: pouch cell
- 12: pouch
- 14: border
- 16: terminal
- 18: battery cell arrangement
- 20: support frame
- 22: border
- 24: cooling frame
- 26: cooling channel
- 28: inlet
- 30: outlet
- 31: sealing area
- 32: foil
- 34: compressible member
- 36: sealing
- 37: electrical contact
- 38: terminal cooling channel
- 40: terminal interconnection
- 42: insert
- 44: thermally isolating material
- S: stacking direction
- A: cross-section
- B: detail
- C: cross-section
- D: detail
- E: cross-section

## Claims

1. A battery cell arrangement (18), comprising:
at least three pouch cells (10) stacked along a stacking direction (S), wherein each pouch cell (10) is made of two foils, which are welded together at a border (14) of the pouch cell (10);
a support frame (20) arranged between adjacent pouch cells (10), the support frame (20) having a cooling frame (24) sandwiched between the pouch cells (10) and the support frame (20) having a border (22) that is thicker than the cooling frame (24) in the stacking direction (S);
wherein the cooling frame (24) is a flat and/or plate like part of the support frame (20), which has two flat faces facing pouches (12) of the adjacent pouch cells (10);
wherein the cooling frame (24) has a cooling channel (26) running through the cooling frame (24) between an outlet (30) and an inlet (28);
wherein the cooling channel (26) is covered by a foil (32) attached to the cooling frame (24) for forming a tubular passage through the cooling frame (24);
wherein a pouch cell (10) is mechanically supported at the circumferential border (14) by two adjacent support frames (20), which clamp the border (14) of the pouch cell (10) between them;
wherein a pouch (12) of one of the pouch cells (10) lies on the foil (32) attached to the cooling frame (23).

2. The battery cell arrangement (18) of claim 1,
wherein a compressible member (34) is attached to the cooling frame (24) besides the cooling channel (26);
wherein the foil (32) is positioned on the compressible member (34).

3. The battery cell arrangement (18) of claim 2,
wherein the compressible member (34) covers the cooling frame (24) completely between sections of the cooling channel (26).

4. The battery cell arrangement (18) of one of the previous claims,
wherein at least a section of the cooling channel (26) extend completely through the cooling frame (24) in the stacking direction (S) of the pouch cells (10);
wherein the cooling channel (26) is covered on both sides of the cooling frame by a foil (32).

5. The battery cell arrangement (18) of one of the previous claims,
wherein at least a section of the cooling channel (26) extends only partially through the cooling frame (24) in the stacking direction (S) of the pouch cells (10).

6. The battery cell arrangement (18) of one of the previous claims,
wherein the cooling frame (24) comprises two cooling channels (26), each cooling channel (26) provided on one side of the cooling frame (24) and each cooling channel extending (26) only partially through the cooling frame (24).

7. The battery cell arrangement (18) of claim 6,
wherein the two cooling channels (26) are separated by a thermally isolating material (44) provided in the support frame (20).

8. The battery cell arrangement (18) of one of the previous claims,
wherein the outlet (30) and the inlet (28) are provided in a border (22) of the support frame (20), such that outlets (30) and inlets of (28) adjacent support frames (20) are overlapping each other; and/or
wherein electrical contacts (37) for detecting a leak are provided in a sealing area (31) surrounding the inlet (28) and/or the outlet (30).

9. The battery cell arrangement (18) of one of the previous claims,
wherein the support frame (20) has a terminal cooling channel (38) in a border (22) below an electrical terminal interconnection (40), which is interconnecting two terminals (16) of adjacent pouch cells (10).

10. The battery cell arrangement (18) of claim 9,
wherein a thermally conducting insert (42) is provided in the border (22) between the terminal cooling channel (38) and the terminal interconnection (40); and/or
wherein the terminal cooling channel (38) is formed as tubular passage within the border (22) of the support frame (20); and/or
wherein the terminal cooling channel (38) is wider in the stacking direction (S) of the pouch cells (10) than the cooling channel (26) in the cooling frame (24).

11. The battery cell arrangement (18) of one of the previous claims,
wherein the foil (32) is sealed to the cooling frame (22) with two separate sealings (36); and/or
wherein electrical contacts (37) for detecting a leak are provided between the sealings (36).

## Patentansprüche

1. Batteriezellenanordnung (18), die Folgendes umfasst:
mindestens drei Beutelzellen (10), die entlang einer Stapelrichtung (S) gestapelt sind, wobei jede Beutelzelle (10) aus zwei Folien hergestellt ist, die an einem Rand (14) der Beutelzelle (10) miteinander verschweißt sind;
einen Stützrahmen (20), der zwischen benachbarten Beutelzellen (10) angeordnet ist, wobei der Stützrahmen (20) einen Kühlrahmen (24) aufweist, der sandwichartig zwischen den Beutelzellen (10) angeordnet ist, und der Stützrahmen (20) einen Rand (22) aufweist, der in der Stapelrichtung (S) dicker als der Kühlrahmen (24) ist;
wobei der Kühlrahmen (24) ein flacher und/oder plattenartiger Teil des Stützrahmens (20) ist, der zwei flache Flächen aufweist, die den Beuteln (12) der benachbarten Beutelzellen (10) zugewandt sind;
wobei der Kühlrahmen (24) einen Kühlkanal (26) aufweist, der zwischen einem Auslass (30) und einem Einlass (28) durch den Kühlrahmen (24) verläuft;
wobei der Kühlkanal (26) durch eine Folie (32) bedeckt ist, die zum Bilden eines röhrenförmigen Durchgangs durch den Kühlrahmen (24) an dem Kühlrahmen (24) angebracht ist;
wobei eine Beutelzelle (10) mechanisch an dem umlaufenden Rand (14) durch zwei benachbarte Stützrahmen (20) gestützt ist, die den Rand (14) der Beutelzelle (10) zwischen sich einklemmen;
wobei ein Beutel (12) einer der Beutelzellen (10) auf der Folie (32) liegt, die an dem Kühlrahmen (23) angebracht ist.

2. Batteriezellenanordnung (18) nach Anspruch 1,
wobei ein komprimierbares Element (34) neben dem Kühlkanal (26) an dem Kühlrahmen (24) angebracht ist;
wobei die Folie (32) auf dem komprimierbaren Element (34) positioniert ist.

3. Batteriezellenanordnung (18) nach Anspruch 2,
wobei das komprimierbare Element (34) den Kühlrahmen (24) zwischen Abschnitten des Kühlkanals (26) vollständig bedeckt.

4. Batteriezellenanordnung (18) nach einem der vorhergehenden Ansprüche,
wobei sich mindestens ein Abschnitt des Kühlkanals (26) in der Stapelrichtung (S) der Beutelzellen (10) vollständig durch den Kühlrahmen (24) erstreckt;
wobei der Kühlkanal (26) auf beiden Seiten des Kühlrahmens von einer Folie (32) bedeckt ist.

5. Batteriezellenanordnung (18) nach einem der vorhergehenden Ansprüche,
wobei sich mindestens ein Abschnitt des Kühlkanals (26) in der Stapelrichtung (S) der Beutelzellen (10) nur teilweise durch den Kühlrahmen (24) erstreckt.

6. Batteriezellenanordnung (18) nach einem der vorhergehenden Ansprüche,
wobei der Kühlrahmen (24) zwei Kühlkanäle (26) umfasst, wobei jeder Kühlkanal (26) auf einer Seite des Kühlrahmens (24) bereitgestellt ist und sich jeder Kühlkanal (26) nur teilweise durch den Kühlrahmen (24) erstreckt.

7. Batteriezellenanordnung (18) nach Anspruch 6,
wobei die zwei Kühlkanäle (26) durch ein thermisch isolierendes Material (44) getrennt sind, das in dem Stützrahmen (20) bereitgestellt ist.

8. Batteriezellenanordnung (18) nach einem der vorhergehenden Ansprüche,
wobei der Auslass (30) und der Einlass (28) in einem Rand (22) des Stützrahmens (20) so bereitgestellt sind, dass Auslässe (30) und Einlässe (28) benachbarter Stützrahmen (20) einander überlappen; und/oder
wobei elektrische Kontakte (37) zum Detektieren eines Lecks in einem Dichtungsbereich (31) bereitgestellt sind, der den Einlass (28) und/oder den Auslass (30) umgibt.

9. Batteriezellenanordnung (18) nach einem der vorhergehenden Ansprüche,
wobei der Stützrahmen (20) einen Anschlusskühlkanal (38) in einem Rand (22) unterhalb einer elektrischen Anschlusszwischenverbindung (40) aufweist, die zwei Anschlüsse (16) benachbarter Beutelzellen (10) miteinander verbindet.

10. Batteriezellenanordnung (18) nach Anspruch 9,
wobei ein wärmeleitender Einsatz (42) in dem Rand (22) zwischen dem Anschlusskühlkanal (38) und der Anschlusszwischenverbindung (40) bereitgestellt ist; und/oder
wobei der Anschlusskühlkanal (38) als röhrenförmiger Durchgang in dem Rand (22) des Stützrahmens (20) gebildet ist; und/oder
wobei der Anschlusskühlkanal (38) in der Stapelrichtung (S) der Beutelzellen (10) breiter als der Kühlkanal (26) in dem Kühlrahmen (24) ist.

11. Batteriezellenanordnung (18) nach einem der vorhergehenden Ansprüche,
wobei die Folie (32) mit zwei separaten Dichtungen (36) an dem Kühlrahmen (22) abgedichtet ist; und/oder
wobei elektrische Kontakte (37) zum Detektieren eines Lecks zwischen den Dichtungen (36) bereitgestellt sind.

## Revendications

1. Agencement (18) de cellules de batterie, comportant :
au moins trois cellules (10) à poche empilées suivant une direction d'empilement (S), chaque cellule (10) à poche étant constituée de deux feuilles, qui sont soudées ensemble au niveau d'une bordure (14) de la cellule (10) à poche ;
un cadre (20) de soutien disposé entre des cellules adjacentes (10) à poche, le cadre (20) de soutien comprenant un cadre (24) de refroidissement pris en sandwich entre les cellules (10) à poche et le cadre (20) de soutien possédant une bordure (22) qui est plus épaisse que le cadre (24) de refroidissement dans la direction d'empilement (S) ;
le cadre (24) de refroidissement étant une partie plate et/ou semblable à une plaque du cadre (20) de soutien, qui présente deux faces plates faisant face à des poches (12) des cellules adjacentes (10) à poche ;
le cadre (24) de refroidissement possédant un canal (26) de refroidissement qui passe à travers le cadre (24) de refroidissement entre une sortie (30) et une entrée (28) ;
le canal (26) de refroidissement étant recouvert par une feuille (32) fixée au cadre (24) de refroidissement pour former un passage tubulaire à travers le cadre (24) de refroidissement ;
une cellule (10) à poche étant soutenue mécaniquement au niveau de la bordure circonférentielle (14) par deux cadres (20) de soutien adjacents, qui serrent la bordure (14) de la cellule (10) à poche entre eux ;
une poche (12) de l'une des cellules (10) à poche reposant sur la feuille (32) fixée au cadre (23) de refroidissement.

2. Agencement (18) de cellules de batterie selon la revendication 1,
un élément compressible (34) étant fixé au cadre (24) de refroidissement outre le canal (26) de refroidissement ;
la feuille (32) étant positionnée sur l'élément compressible (34).

3. Agencement (18) de cellules de batterie selon la revendication 2,
l'élément compressible (34) recouvrant entièrement le cadre (24) de refroidissement entre des sections du canal (26) de refroidissement.

4. Agencement (18) de cellules de batterie selon une des revendications précédentes,
au moins une section du canal (26) de refroidissement s'étendant entièrement à travers le cadre (24) de refroidissement dans la direction d'empilement (S) des cellules (10) à poche ;
le canal (26) de refroidissement étant recouvert des deux côtés du cadre de refroidissement par une feuille (32).

5. Agencement (18) de cellules de batterie selon une des revendications précédentes,
au moins une section du canal (26) de refroidissement ne s'étendant que partiellement à travers le cadre (24) de refroidissement dans la direction d'empilement (S) des cellules (10) à poche.

6. Agencement (18) de cellules de batterie selon une des revendications précédentes,
le cadre (24) de refroidissement comportant deux canaux (26) de refroidissement, chaque canal (26) de refroidissement étant placé d'un côté du cadre (24) de refroidissement et chaque canal (26) de refroidissement ne s'étendant que partiellement à travers le cadre (24) de refroidissement.

7. Agencement (18) de cellules de batterie selon la revendication 6,
les deux canaux (26) de refroidissement étant séparés par un matériau thermiquement isolant (44) placé dans le cadre (20) de soutien.

8. Agencement (18) de cellules de batterie selon une des revendications précédentes,
la sortie (30) et l'entrée (28) étant ménagées dans une bordure (22) du cadre (20) de soutien, de telle façon que des sorties (30) et des entrées (28) de cadres (20) de soutien adjacents se chevauchent ; et/ou
des contacts électriques (37) servant à détecter une fuite étant placés dans une zone (31) d'étanchéité qui entoure l'entrée (28) et/ou la sortie (30).

9. Agencement (18) de cellules de batterie selon une des revendications précédentes,
le cadre (20) de soutien possédant un canal (38) de refroidissement de bornes dans une bordure (22) au-dessous d'une interconnexion (40) de bornes électriques, qui interconnecte deux bornes (16) de cellules adjacentes (10) à poche.

10. Agencement (18) de cellules de batterie selon la revendication 9,
un insert thermiquement conducteur (42) étant placé dans la bordure (22) entre le canal (38) de refroidissement de bornes et l'interconnexion (40) de bornes ; et/ou
le canal (38) de refroidissement de bornes étant formé comme un passage tubulaire à l'intérieur de la bordure (22) du cadre (20) de soutien ; et/ou
le canal (38) de refroidissement de bornes étant plus large dans la direction d'empilement (S) des cellules (10) à poche que le canal (26) de refroidissement dans le cadre (24) de refroidissement.

11. Agencement (18) de cellules de batterie selon une des revendications précédentes,
la feuille (32) étant scellée au cadre de refroidissement (22) à l'aide de deux scellés (36) distincts ; et/ou
des contacts électriques (37) destinés à détecter une fuite étant placés entre les scellés (36).
